Europäisches Patentamt

European Patent Office

Office européen des brevets

(11) Publication number: **0 416 742 A2**

# EUROPEAN PATENT APPLICATION

(21) Application number: 90308522.3

(22) Date of filing: 02.08.90

(51) Int. Cl.⁵: **G06K 9/00**, G06K 9/20

(30) Priority: 03.08.89 US 389254

(43) Date of publication of application:
13.03.91 Bulletin 91/11

(84) Designated Contracting States:
DE ES FR GB IT NL SE

(71) Applicant: MINNESOTA MINING AND
MANUFACTURING COMPANY
3M Center, P.O. Box 33427
St. Paul, Minnesota 55133-3427(US)

(72) Inventor: Look, Thomas F., c/o Minnesota
Mining
and Manufac. Co., 2501 Hudson Road,
P.O.Box 33427
St. Paul, Minnesota 55133-3427(US)

(74) Representative: Baillie, Iain Cameron et al
c/o Ladas & Parry Isartorplatz 5
W-8000 München 2(DE)

(54) Retroreflective vehicle identification articles having improved machine legibility.

(57) Improved vehicle identification articles, such as license plates or license tabs, employ materials selectively absorptive or transmissive in the near infrared spectrum. The absorptive materials may form non-alphanumeric recognition symbols, alphanumeric characters in addition to the license number, or the license number itself. In preferred embodiments, the symbols are alphanumeric characters chosen from a font more easily read by vehicle identification equipment than other fonts. Retroreflective image analysis systems suitable for use with the articles are described.

Fig. 1B

# RETROREFLECTIVE VEHICLE IDENTIFICATION ARTICLES HAVING IMPROVED MACHINE LEGIBILITY

## Technical Field

This invention involves vehicle identification by automated equipment, especially identification of retroreflective vehicle license plates.

## Background

Vehicle license plates vary widely in shape, size, character font design, color, and installation location on vehicles. The relative sizes and projections of plates, as viewed at an angle from a fixed point on the side of a roadway, also vary. Furthermore, license plates become dirty in use. Each of these factors reduces the accuracy of automated systems which attempt to locate and read the alphanumeric characters on the license plate of a moving vehicle from a fixed, remote point. These factors are especially significant outdoors, where weather and background light levels change quickly and often.

Automated systems which locate and read retroreflective vehicle identification articles (such as license plates) at a distance are known as retroreflective image analysis (RIA) systems. Examples are taught in U.S. Patents 4,491,923 (Look), 4,731,854 (Gonzalez), and 4,817,166 (Gonzalez et al.)., Each of these RIA systems operates in (at least) a two step process. First, the system illuminates a field of view through which vehicles pass. If a retroreflective article is within the field of view, the system detects the presence of a relatively small-sized but bright retroreflective image of the entire article within the large field of view. Second, the system analyzes the image of the article for alphanumeric characters. It does this by relying on the principle that the non-retroreflective or partially-retroreflective characters of the article exhibit high contrast against the fully retroreflective background of the article. This contrast allows the system to discern the shape of ("read") the digitized image of the characters.

## Disclosure of Invention

The invention is an improved vehicle identification article for use with a retroreflective image analysis system, comprising materials that absorb light in one of the visible or near infrared spectra and transmit light in the other. The absorptive materials provide the article with different images when viewed in the different spectra. The absorptive/transmissive materials may form arbitrary shapes or alphanumeric characters. In preferred embodiments, the alphanumeric characters are chosen from a font that is more accurately read by a retroreflective image analysis system than other fonts.

## Brief Description of the Drawing

Figure 1A is a front view of a license plate embodiment of this invention as viewed in the visible spectrum.

Figure 1B is a front view of the license plate of Figure 1A as viewed in the near infrared spectrum.

Figure 2 is a font of alphanumeric characters employed in preferred embodiments of this invention.

Figure 3A is a front view of three license tab embodiments of this invention as viewed in the visible spectrum.

Figure 3B is a front view of the license tabs of Figure 3A as viewed in the near infrared spectrum.

Figure 4 is a schematic view of a system for locating and reading vehicle identification articles at a distance.

## Detailed Description

A retroreflective image analysis (RIA) system, such as that taught by U.S. Patent 4,491,923 (Look), locates a retroreflective vehicle identification article of a moving vehicle before it attempts to analyze the image of the article for any information that may appear on the article. For example, the RIA system must locate a retroreflective license plate before it can read the license number.

Vehicle identification articles vary widely in their installation positions on vehicles. Even when installed in substantially the same location on vehicles, such as below the middle of the front bumper, the varied bumper height of vehicles leads to varied license plate locations. And, vehicles themselves may be at varying points on the roadway, at a distance down the traffic lane from the system as well as from one side of the lane to the other. Thus, the RIA system must initially accept large variations in the relative sizes, locations, and intensities of light sources which it analyzes to determine if they are retroreflective vehicle identification articles. This can cause the system to confuse a light source such as a tail light for a retroreflective article. An article of this invention minimizes the errors because it has features that the RIA system can use to identify, locate, and analyze the article more accurately than non-inventive articles.

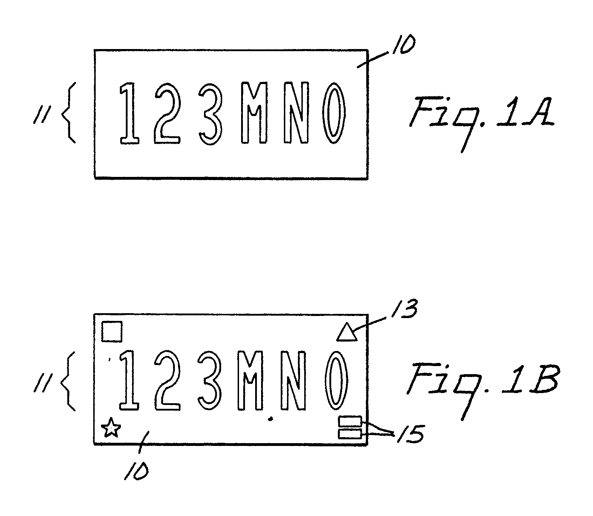

Figures 1A and 1B show two views of the front face of a license plate embodiment of the present invention. Figure 1A shows the license plate as it appears when viewed in the visible spectrum (400-700 nanometer wavelength) and Figure IB as it appears when viewed in the near infrared spectrum (700-1100 nanometer wavelength). In Figures 1A and 1B a retroreflective license plate 10 has a license number 11, which as shown comprises the six alphanumeric characters 123 MNO, but in general only one alphanumeric character is required. In Figure 1B, the near infrared image shows that license plate 10 further comprises four non-alphanumeric recognition symbols 12-15, which are visible only when viewed in the near infrared spectrum. The recognition symbols shown in Figure 1B are a box 12, a triangle 13, a star 14, and a set of two horizontal bars 15, but the number, shape, and location of the recognition symbols is illustrative only. At a minimum, any recognition symbol should be known to the RIA system, and be arbitrarily shaped, i.e., distinguishable (in the near infrared spectrum) from other likely sources of retroreflected light, such as turn signals, tail lights, etc. It is highly unlikely that the image of any such "corrupting" source of light would resemble an image comprising the arbitrary shapes of recognition symbols 12-15. Thus, when the RIA system attempts to locate the license plate 10, it can immediately reject images that do not have recognition symbols 12-15.

The recognition symbols 12-15 on the license plate of Figures 1A and 1B may be formed by providing on the front face of a license plate a material that is absorptive in the near infrared spectrum but transparent in the visible spectrum, known for these purposes as an "IR absorber/visible transmitter." Transparency to visible light helps ensure that the appearance of the license plate 10 does not change in the visible spectrum, allowing the inventive plate 10 to be added to the inventory of existing plates. The partially-retroreflective or non-retroreflective recognition symbols 12-15 are detected by the contrast between the highly retroreflective area surrounding the symbols and the comparatively less retroreflective area of the symbols.

In a related embodiment, an IR absorber/visible transmitter improves the legibility of the license plate number 11. As viewed from the front face of the license plate 10, the license number characters 123 MNO are colored and less than fully retroreflective only to the extent that the ink used to form each character absorbs light. The plate background may also be colored, but to improve character contrast it generally is not, or is so only to a very slight degree, enough to be visible to the naked eye upon ambient or direct illumination. However, the plate background color or design is not very bright in the near infrared, not enough to affect the retroreflected image viewed by a RIA system. The inks in present license plate use have a particular color, i.e., maximum absorption at a particular wavelength in the visible spectrum, and (except for black inks) lose some or all absorption in the infrared. However, the license plate background color or design is not very visible in the infrared. When viewed in the infrared by an RIA system, the contrast between the characters and the background decreases, reducing the ability of the system to read the license number. The contrast between the characters and the background is increased by forming the alphanumeric character with both a colored ink and an IR absorber/visible transmitter. Providing an IR absorber/visible transmitter on the faces of the alphanumeric characters increases the contrast between the characters and the background in the infrared spectrum without changing the appearance of the license plate in the visible spectrum. This embodiment may be employed in lieu of, or in addition to, the use of recognition symbols.

The license plate embodiment of the present invention may be made with the following process. A galvanized steel or aluminum metal base, or "blank," is cleaned and rinsed in a suitable solvent. A thin, flexible, retroreflective sheeting is adhered to the blank. Such a sheeting generally comprises a flexible base and some type of retroreflective elements adhered to or otherwise incorporated into the base. For example, glass microspheres partially coated with a reflective material may be embedded in a thin polymeric layer coated on a paper base (e.g., U.S. Patent 2,407,680 (Palmquist et al.)), or "cube-corner" elements may be formed directly in a polymeric base (e.g., U.S. Patent 4,588,258 (Hoopman)).

The preferred sheeting has an average coefficient of retroreflection of two hundred candela/lux/square-meter, measured at 0.2° observation angle and -4.0° entrance angle. One presently used sheeting, "REFLECTO-LITE" brand reflective sheeting produced by the Minnesota Mining and Manufacturing Company (3M), employs partially coated glass microspheres, and has a typical average coefficient of retroreflection of sheeting used, about fifty candela/lux/square-meter, measured at 0.2° observation angle and -4.0° entrance angle. Such sheeting is acceptable if a sufficiently intense illumination source is used by the RIA system.

The back (non-retroreflective) side of the sheeting has a pressure-sensitive adhesive protected with a release liner. The release liner is removed and the sheeting pressed onto the blank. To ensure a tight adhesion to the blank without air pockets under the sheeting, the sheeting is held during the adhesion process at a continuously adjusted tension, which may involve stretching the sheeting. The retroreflective blank is exposed to elevated temperature for an extended time to cure the adhesive.

To incorporate recognition symbols directly onto the front face of the license plate in locations other than those of the license number, the IR absorber/visible transmitter is printed onto the face of the retroreflective blank. Alternatively, the recognition symbols could be pre-printed onto the retroreflective sheeting prior to adhesion to the metal blank.

To produce the license plate number, metal templates in the shapes of individual alphanumeric characters are placed on a flat surface, in the order and spacing required to make the license number, and covered with a retroreflective license plate blank. The retroreflective front side of the blank is away from the characters, which contact the non-retroreflective back side. The blank is evenly pressed flush to the flat surface, causing the character templates to emboss the license number into the front side of the blank from the back side.

Next, colored ink is roll coated onto the front side of the embossed retroreflective surface of the characters. If the IR absorber/visible transmitter is to be applied to the painted characters, it may be incorporated directly into the colored ink. Alternatively, an IR absorber/visible transmitter may be incorporated into a separate material coated on top of the roll coated ink.

The embossed and painted blank is then dried in an infrared radiation oven. An optional transparent sealing coat may be applied to the license plate and baked until dry.

While the embossing process is common, it is not required to construct a license plate according to this invention. For example, instead of embossing and roll-coat inking the characters onto the retroreflective blank, separate pieces of retroreflective sheeting could be adhered to the front face of the blank. The pieces could be cut in the shapes of alphnumeric characters from sheeting which has been coated with the ink and IR absorber/visible transmitter.

Suitable IR absorber/visible transmitters are the dyes disclosed in U.S. Patent 4,581,325 (Kitchin et al.), especially Dye No. 33 in Table II, which has a maximum absorption wavelength of 818 nanometers. Also suitable are transparent iron oxide pigments and iron oxide flake. Other suitable chemicals are identified by ICI Colours & Fine Chemicals Company of Manchester England as S101756, S116510, S116510/2, S109186, and S109564.

The sheeting may be any of several colors or designs depending on the jurisdiction issuing the license plates. The colored inks may be opaque or transparent, but opaque is preferred. Opaque inks absorb visible light of all frequencies except for that of the color, which is reflected, such that an image which may be behind the colored ink cannot be seen through the ink. Transparent inks absorb visible light of all frequencies except for that of the ink color, which is transmitted through the ink rather than reflected by it, such that an image behind the colored ink may be seen. On license plates, opaque inks provide greater visual contrast of the license number against the plate backround (i.e., the sheeting color or design) than transparent inks, improving readability of the number by law enforcement officials and others. Transparent inks have the advantage that the entire plate area is retroreflective to some extent, increasing the safety value of the plate. Aesthetic considerations in the choice of plate background and character colors may suggest transparent inks in lieu of opaque inks or vice versa.

Recognition symbols 12-15 could be formed on license plate 10 by incorporating them into a separate retroreflective article, such as a piece of retroreflective sheeting, which is attached to the front face of the license plate. A suitable article is a "license tab" adhered to license plates to indicate that per valorem or road use taxes assessed against the vehicle have been paid. Furthermore, a license tab could identify the jurisdiction which issued the license plate and license tab. Although the jurisdiction is usually identified in the design of the retroreflective sheeting, it is generally not preferred to read it with the RIA system because that slows the system response.

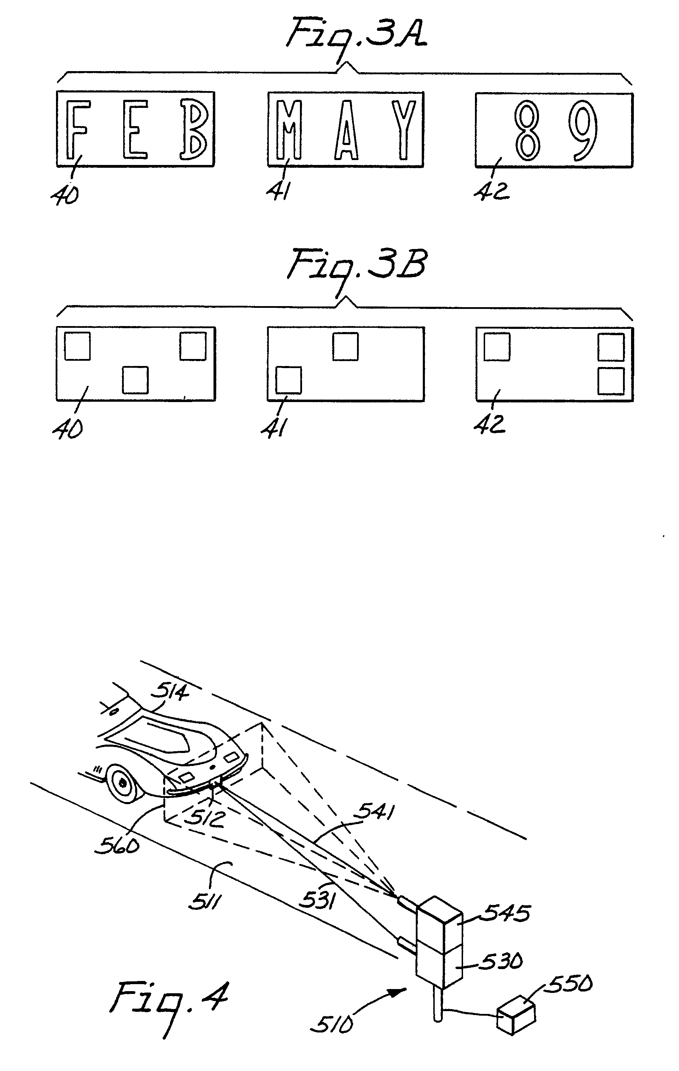

If jurisdiction identification is desired, a preferred license tab embodiment incorporates a recognition symbol for each jurisdiction, in the form of a unique "block code" as shown on the three unique license tabs 40-42 of Figures 3A and 3B. In Figure 3A the license tabs 40-42 tabs appear in the visible spectrum and in Figure 3B they appear in the near infrared spectrum. In the visible spectrum, the license tabs 40-42 display alphanumeric characters formed on the front face of the sheeting and recognition symbols by a suitable opaque or transparent ink. The alphanumeric characters identify the expiration date of the license tabs 40-42, but in general they are optional. In the near infrared spectrum, the image of each license tab 40-42 further comprises a 2X3 matrix of square recognition symbols, formed on the front face of the retroreflective sheeting of the tab by an IR absorber/visible transmitter. A large number of unique tabs is possible if each tab bears between one and six blocks, arranged in as many unique combinations as possible given the total number of blocks per tab. The RIA system reads and recognizes a unique block code used for each possible jurisdiction.

If used, the alphanumeric characters of Figure 3A are formed on the front face of the retroreflective sheeting and IR absorber/visible transmitter from a material that transmits near infrared light and absorbs visible light, i.e., an "IR transmitter/visible absorber." A suitable material, taught in U.S. Patent 3,758,193 (Tung), comprises water-insoluble organic pigment particles dispersed in a combination of an organic binder (typically transparent to visible and near infrared light) and a volatile thinner to disperse or dissolve the pigment particles. The particles absorb the near infrared light.

A variation on this embodiment employs a material that absorbs both near infrared and visible light (an "IR and visible absorber") to form recognition symbols absorptive in both the infrared and the visible spectra. The materials suitable for this embodiment (e.g., "REFLECTOLITE" brand roll coat inks from the Minnesota Mining and Manufacturing Company (3M), which have sufficient absorption in the near infrared for this embodiment) are generally less expensive than IR absorber/visible transmitters. Thus, this embodiment is preferred if there is no need to hide the recognition symbols in the visible spectrum completely. The color of a background ink coated on the retroreflective sheeting should match the color of the IR and visible absorber coated above it, so that the recognition symbols are less visible in ordinary light than if they were formed with an IR absorber/visible transmitter, although the edges of the symbols may provide some visibility.

In another embodiment, recognition symbols visible in at least the near infrared, and the underlying retroreflective sheeting, may be covered completely with an IR transmitter/visible absorber. This construction prevents retroreflection of visible light by the underlying retroreflective material. For relatively small articles affixed to larger retroreflective articles (e.g., license tabs adhered to license plates), this is not a major disadvantage, although there are the additional costs of material and preparation. However, the use of the IR transmitter/visible absorber provides the advantages of: (1) a completely covert recognition symbol, which is desireable in high security applications, and (2) a good background for any optional visible information (such as the month and year of expiration of a license tab) which may be printed on the tabs, especially if the color of the IR transmitter/visible absorber is white and the information is printed in colored inks such as red or blue.

In general, non-alphanumeric recognition symbols are preferred so that the RIA system does not confuse them with any alphanumeric characters, such as those used for the license number, although size and location on the plate can be used as distinguishing factors. In some applications, however, recognition symbols which are alphanumeric characters are preferred. For example, to detect counterfeit license plates, an "extra" or "check" character could be employed in an error detection scheme to verify the license number without checking the vehicle registration records of the jurisdiction issuing the license plate.

Other applications for retroreflective articles made in accordance with the invention include: a parking validation sticker to allow access to a parking lot or ramp; a vehicle fleet identification sticker to identify vehicle ownership; and a "bumper sticker" expressing political or cultural sentiments or identifying scenic locations.

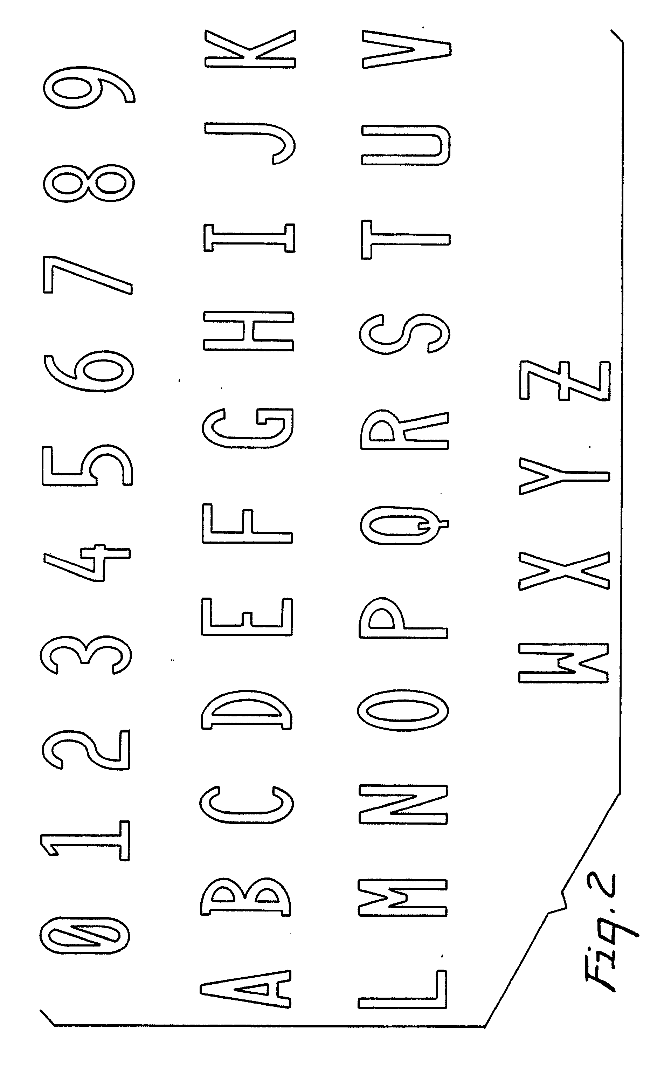

In general, any alphanumeric characters which will be read by an RIA system should be selected from the font shown in Figure 2. These characters provide maximum contrast and legibility for any RIA system, without losing legibility for ordinary reading by humans in the visible spectrum. To emphasize the features of each character, Figures 1A-1B, 2 and 3A-3B show only the outline of each character, but in use the character outlines would be filled in for maximum readability.

To improve machine readability, the characters in the font of Figure 2 all fit inside a rectangle of the same dimensions, and employ: (1) a stroke width of 10% of character height; (2) open areas (e.g., the center of the V and similar characters) which are as large as possible; (3) square corners which are as close to orthogonal as possible, and curved corners which are elliptical and have a large a curvature as possible; and (4) exaggerated differences between characters of similar shape (e.g., 8 and B).

The characters should be placed on an article on equidistant centerlines such that at least two stroke widths lie between adjacent characters, and preferably such that the characters are as separated from each other as the article will allow. The characters should be as large as possible. If embossed into a metal license plate blank, the characters should be no more than 1.524 mm in embossed height above the face of the license plate. Also, there should be sharp edges between the plate face and the vertical portion of the character (which itself should be perfectly vertical to the plate face), and between the vertical portion and the flat embossed character surface. This construction minimizes shadows and curved surfaces at the edges of characters, which make location of the edge of the character difficult.

The font shown in Figure 2 is suitable for use with any vehicle identification article that comprises alphanumeric characters read by any similarly designed RIA system. A comparison of the font shown in Figure 2 to the fonts used presently on license plates produced a ten to twenty percent increase in character reading accuracy, depending on the particular font used in the comparison.

An unexpected but very important result of the inventive font is that any of the thirty-six characters may be missing either the upper or lower one-fourth of the character with no decrease in machine readability. This feature is especially important in license plate applications, as portions of license numbers are often obscured by a decorative or protective license plate frame, bumper, or other feature of the vehicle.

Examples of RIA systems which may be used with the invention are taught in U.S. Patents 4,491,923 (Look), and 4,817,166 (Gonzalez et al.). Figure 4 is schematic view of one embodiment of such a system, which is specifically illustrated for use with a license plate but may be used with any vehicle identification article of this invention. The system 510 comprises an illumination source 530, an analyzer 545, and electronics 550. Using the illumination source 530, the system locates a retroreflective license plate 512 within a field of view 560, and reads the license plate number from the image of the license plate 512, in (at least) two separate steps.

In the first step, the system 510 detects the presence of the license plate 512 because of (1) the retroreflection and shape of the license plate 512 as a whole; and (2) the location of dark areas representing potential characters inside the retroreflective area. The illumination source 530 periodically emits illumination 531 into the field of view 560, preferably at least thirty times per second. If a moving vehicle 514 traveling on road 511 carries a retroreflective license plate 512 into the field of view 560, the license plate 512 reflects the illumination 531 along a return path 541 to the analyzer 545. The electronics 550 receives the output of the analyzer 545 and determines the location of the license plate 512 within the field of view 560.

In the second step, the license plate is "read," i.e., the license plate image is analyzed for the contrast of any relatively dark license number characters against the relatively bright retroreflective plate background. This allows the electronics 550 to extract the license number from a portion of the field of view 560 previously identified as the image of license plate 512. The image analysis may involve any of several techniques known in the art. For example, U.S. Patent 4,491,923 (Look) at column 8 lines 5-46, teaches "template matching," a technique which analyzes those observed configurations of adjacent portions of the image which have approximately equal magnitudes of reflected light intensity. The configurations are compared to a library of the alphanumeric characters stored in a portion of the electronics 550. Typically the comparision includes assigning a scaled value to the reflected light intensity of each pixel of the configuration, followed by a standard numerical correlation between the set of scaled values and a similar set of values of a digitized representation of each member of the alphanumeric character library. The character with the highest correlation (above a threshold) to the configuration is taken to be the character of that portion of the license number. Of course, the image analysis is not limited to alphnumeric characters or recogntion symbols, as the system may "read" any discernible portion of the field of view that the electronics regards as a unique feature, based on the particular digitized representations stored in the electronics.

When the vehicle identification article comprises alphanumeric characters selected from the font shown in Figure 2, the preferred image analysis involves a comparison of the shapes formed by considering each configuration (potential character) as if it were lying within a rectangle of the same total height and width as all the characters, i.e., a character-sized "box" drawn around the configuration. This forms open areas, closed areas, curved corners and square corners formed by the outside portions of the potential character. These features generally gives a suffcient basis to identify a character by comparison to the known font, independent of character size. If the comparison indicates that the configuration may be either of the letters O or 9, the inside of the configuration is considered also. The comparison is made by the feature extration method.

The illumination source 530 may be a flash unit outputting one hundred twenty watt-seconds, such as a six hundred watt Norman brand helical flash lamp. A parabolic reflector helps the illumination source 530 provide uniform illumination over essentially the entire area of the field of view 560. A visible cut filter is used so that the illumination 531 comprises only near infrared radiation.

The analyzer 545 is preferably a solid-state, shuttered, charged-coupled-detector (CCD) type video camera, filtered so that only near infrared radiation is detectable. Suitable analyzers include a General Electric model 2710-A3, or a NEC model TI-23A, although other models having a resolution of at least one hundred twenty five thousand pixels may be used. The preferred model is a Sony model C-TEC TK66, which has four hundred fifty lines of horizontal resolution. The sample time of the analyzer 545 is preferably 1/10,000th second, triggered by the electronics 550 in coordination with the strobing of the illumination source 530.

The image analysis is performed on digital data by electronics 550, which comprises conventional analog/digital converters, digital signal processors, and digital computers, as known in the art. A suitable set of equipment is any of Perceptics Corporation models IP-920, IP-921 (preferred), or IP-300.

## Claims

1. A font of alphanumeric characters as shown in Figure 2.

2. A retroreflective vehicle identification article having at least one alphanumeric character selected from a font as shown in Figure 2.

3. A retroreflective vehicle identification article, comprising:

(a) a base having a front face which is retroreflective in both near infrared and visible spectra;

(b) at least one alphanumeric character, viewable from the front face, formed on the article by a first material which is absorptive in at least the visible spectrum; and

(c) a second material, formed on the article and viewable from the front face, which is absorptive in the near infrared spectrum and transparent in the visible spectrum.

4. The vehicle identification article of claim 3, in which the second material forms on the article an arbitrarily shaped recognition symbol which is viewable from the front face.

5. The vehicle identification article of claim 3, in which the second material is formed on the article over the first material in substantially the same shape as the alphanumeric character.

6. The vehicle identification article of claim 3 in which the alphanumeric character is formed by a coat of the first material on an embossed portion of a metal base to which a retroreflective material is attached.

7. The vehicle identification article of claim 3 in which the second material is formed on the article by attachment of a label comprising the second material to the article.

8. The vehicle identification article of claim 3 in which the alphanumeric character is selected from a font as shown in Figure 2.

9. A retroreflective vehicle identification article, comprising:

(a) a base having a front face which is retroreflective in both near infrared and visible spectra;

(b) at least one arbitrarily shaped recognition symbol, viewable from the front face, formed on the article by a first material which is absorptive in at least the near infrared spectrum; and

(c) a second material, formed on the article and viewable from the front face, which is absorptive in the visible spectrum and transparent in the near infrared spectrum.

10. The vehicle identification article of claim 9, in which

the retroreflective front face of the base is absorptive at a particular wavelength in the visible spectrum, and

the first material is additionally absorptive in the visible spectrum at a wavelength substantially equal to that of the retroreflective front face.

11. The vehicle identification article of claim 9, in which the second material

is absorptive in substantially all of the visible spectrum, and

covers substantially all of the first material and front face of the article.

12. The vehicle identification article of claim 11, further comprising a third material which

is transmissive in the near infrared spectrum and absorptive in the visible spectrum, and

forms, on the second material, at least one alphanumeric character viewable from the front face of the article.

13. The vehicle identification article of claim 12, in which the alphanumeric character is selected from a font as shown in Figure 2.

14. The vehicle identification article of claim 9, in which the recognition symbols is block shaped.

15. A retroreflective image analysis system for vehicle identification, comprising

(a) (1) an illumination source,

(2) means for locating a retroreflective object illuminated by the source within a field of view,

(3) means for analyzing an image of the retroreflective object to identify a discernible portion of the field of view, and

(b) a retroreflective vehicle identification article having at least one alphanumeric character selected from the font shown in Figure 2.

16. A retroreflective image analysis system for vehicle identification, comprising

(a) an illumination source,

(b) means for locating a retroreflective object illuminated by the source within a field of view,

(c) means for analyzing an image of the retroreflective object to identify a discernible portion of the field of view, and

(d) a vehicle identification article comprising

(1) a base having a front face which is retroreflective in both near infrared and visible spectra,

(2) at least one alphanumeric character, viewable from the front face, formed on the article by a first material which is absorptive in at least the visible spectrum, and

(3) a second material, formed on the article and viewable from the front face, which is absorptive in the near infrared spectrum and transparent in the visible spectrum.

17. A retroreflective image analysis system for vehicle identification, comprising

(a) (1) an illumination source,

(2) means for locating a retroreflective object illuminated by the source within a field of view,

(3) means for analyzing an image of the retroreflective object to identify a discernible portion of the field of view, and

(b) a vehicle identification article comprising

(1) a base having a front face which is retroreflective in both near infrared and visible spectra;

(2) at least one arbitrarily shaped recognition symbol, viewable from the front face, formed on the article by a first material which is absorptive in at least the near infrared spectrum; and

(3) a second material, formed on the article and viewable from the front face, which is absorptive in the visible spectrum and transparent in the near infrared spectrum.

18. An alphanumeric character selected from a font of alphanumeric characters as shown in Figure 2.

11 { | 1 2 3 M N O |   *Fig. 1A*   10

11 { | 1 2 3 M N O |   *Fig. 1B*   13
10   15

0 1 2 3 4 5 6 7 8 9

A B C D E F G H I J K

L M N O P Q R S T U V

W X Y Z

Fig. 2

## Fig.3A

F E B   M A Y   8 9

40   41   42

## Fig.3B

40   41   42

## Fig.4

514

512
560
511   531
541
545
530
510   550